# EUROPEAN PATENT APPLICATION

(11) **EP 3 000 592 A1**
(43) Date of publication of application: **30.03.2016**
(21) Application number: 14186788.7
(22) Date of filing: 29.09.2014
(51) Int. Cl.: B32B 5/02, B32B 19/04, B32B 27/08, B32B 27/12, B32B 27/30, B32B 27/32, B32B 27/34

(54) **Gas-tight material**

(71) Applicant: Mondi AG, 1030 Wien (AT)
(72) Inventor: Verbouwe, Wouter, 9860 Oostgerzele (BE)
(74) Representative: Hoffmann Eitle

(57) **Abstract**

The present invention relates to a gas-tight material, a process for making the gas-tight material, a use of the gas-tight material and a facer for insulation materials comprising said gas-tight material. The gas-tight material comprises: a substrate (10) comprising mineral fibers, a protection layer (20) arranged on the substrate (10) and a gas barrier layer (30) which is arranged on the protection layer (20). The protection layer (20) has a basis weight of 10 to 100 g/m² and comprises a thermoplastic polymer selected from polyolefins, polyolefin copolymers and combinations thereof. The gas barrier layer (30) contains at least one layer of a gas barrier polymer selected from an ethylene vinyl alcohol copolymer (EVOH), a polyvinyl alcohol (PVOH), a polyvinylidene chloride (PVDC), a polyamide (PA), a polyethylene terephthalate (PET) and combinations thereof and contains at least 4 and up to 60 g/m² of the gas barrier polymer. The thermoplastic polymer of the protection layer (20) is different from the gas barrier polymer.

## Description

The present invention relates to a gas-tight material, a process for making the gas-tight material, a use of the gas-tight material and a facer for insulation materials comprising said gas-tight material.

Gas-tight materials are required for many industrial applications, for instance for insulation materials.

Conventional gas-tight materials are based on paper or cardboard and are laminated with a layer of aluminum as a gas barrier. Paper and cardboard are however not preferable, since they have poor fire and moisture properties. In addition to that, aluminum has several drawbacks. It is not preferable for environmental reasons and it is also somewhat expensive. Further, aluminum is prone to alkaline attack and degradation, so that is has insufficient durability, for instance when used in insulations for buildings.

In EP 2 479 028 A1, gas-tight materials are described, wherein a barrier layer of EVOH is applied directly on a substrate. In order to achieve acceptable gas-tightness, EVOH layers of up to 150 g/m² are employed. Since EVOH is a comparably expensive polymer material, thick layers of EVOH are not economical.

It is therefore an object of the present invention to provide an improved gas-tight material that overcomes the disadvantages of the gas-tight materials according to the prior art. In particular, it is an object to provide a gas-tight material with very good gas-tightness and high durability that can be produced economically. Further objects are to provide a process for making the gas-tight material, a use of the gas-tight material and a facer for insulation materials comprising said gas-tight material.

The above problems are solved by the gas-tight material, the process for making the gas-tight material, the use of the gas-tight material and the facer for insulation materials comprising said gas-tight material according to the independent claims. Dependent claims are directed to preferred embodiments.

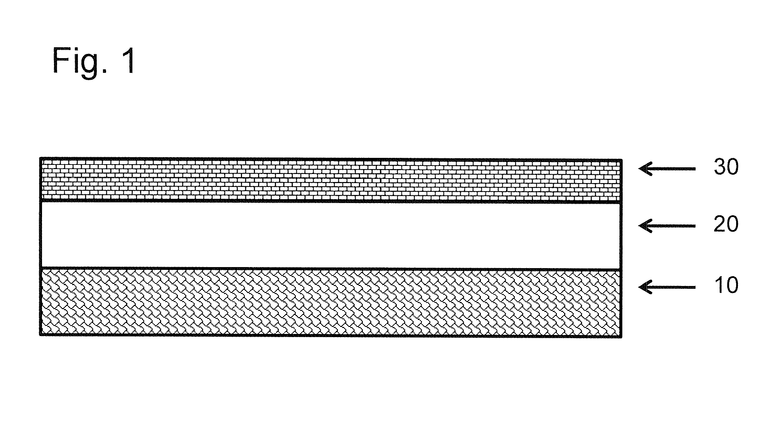

The present invention is further illustrated by Fig. 1 to 3 without the intention of limiting the scope of the present invention to the subject matter depicted therein.
Fig. 1 shows a schematic, cross-sectional view of a gas-tight material according to one embodiment of the present invention;
Fig. 2 shows a schematic, cross-sectional view of a gas-tight material as prepared according to Example 1; and
Fig. 3 shows a schematic, cross-sectional view of a gas-tight material as prepared according to Example 2.

The gas-tight material according to the present invention comprises:
a substrate (10) comprising or consisting of mineral fibers;
a protection layer (20) arranged on the substrate (10), wherein the protection layer (20) has a basis weight of 10 to 100 g/m² and comprises or consists of a thermoplastic polymer selected from the group consisting of polyolefins, polyolefin copolymers and combinations thereof; and
a gas barrier layer (30) which is arranged on the protection layer (20), so that the protection layer (20) is arranged between the substrate (10) and the gas barrier layer (30), wherein
   - the gas barrier layer (30) contains at least one layer of a gas barrier polymer which is selected from a group consisting of an ethylene vinyl alcohol copolymer (EVOH), a polyvinyl alcohol (PVOH), a polyvinylidene chloride (PVDC), a polyamide (PA) (which includes for example PA6 and PA66), a polyethylene terephthalate (PET) and combinations thereof,
   - the gas barrier layer (30) contains at least 4 and up to 60 g/m² of the gas barrier polymer, and
   - the polyolefins and polyolefin copolymers of the protection layer (20) are different from the gas barrier polymer.

Herein, "arranged on", "applied on" or "laminated on" is understood to mean that the respective elements such as layers and films are directly formed on each other or that additional elements such as layers and films can be formed in between; a direct formation is preferred.

Herein, basis weights (in g/m²) are determined according to ISO 4591:1992.

The inventors have surprisingly found that the above gas-tight material exhibits very high gas-tightness although it possesses a comparably small amount (at least 4 and up to 60 g/m²) of gas barrier polymers in gas barrier layer (30). The gas barrier polymers are preferably arranged in layers comprising or consisting of the gas barrier polymers. The inventors attribute this effect to the protection layer (20), which is arranged between substrate (10) and gas barrier layer (30) and protects the gas barrier layer (30) from the mineral fibers of the substrate (10). Without the protection layer (20), the mineral fibers could penetrate into the gas barrier layer (30), which results in decreased gas-tightness at these points. In the gas-tight material according to the present invention, the mineral fibers are covered by the protection layer (20). Hence, the inventors have found that the amount of gas barrier polymers can be reduced when a protection layer (20) is present. Further, surprisingly improved gas-tightness is observed for the gas-tight material according to the present invention in comparison to materials having similar gas barrier layer that is not protected from the mineral fibers of the substrate by a protection layer. The gas-tight material of the present invention is thus particularly economical, because the more expensive gas barrier polymers are partially replaced by the less expensive thermoplastic polymers of the protection layer (20), and exhibits very good gas-tightness.

In addition to that, the protection layer (20) can further serve as a water vapor barrier and protect the gas barrier layer (30) from the uptake of moisture. Moisture can negatively impacts the barrier properties.

As mentioned above, the material shows very good gas-tightness. It has an oxygen transmission rate (OTR) of less than 4.5 cm³/(m²·day) at 23°C and 75% relative humidity (RH) as measured according to ASTM D 3985. The oxygen transmission rate is preferably less than 4.0 cm³/(m²·day) and more preferably less than 3.5 cm³/(m²·day). The oxygen transmission rate is a suitable indicator for the gas-tightness of a material in general. The gas-tight material according to the present invention is therefore particularly suitable for various applications wherein economic gas barriers are required. It can for example be used for insulation materials such as polyurethane (PU) foams, wherein pentane gas is used due to its superior insulation properties, in order to avoid (or at least significantly reduce) the diffusion of air into the insulation material and the replacement of pentane by air.

The gas-tight material of the present invention is preferably free of paper, cardboard and metal or metal films. It does not require or contain any metal or metal films such as aluminum foils. The gas-tight material shows therefore preferably good stability against moisture, alkaline attacks or degradation and fire. It exhibits superior durability in long-time applications such as building insulations.

The substrate (10) may, in principle, comprise all kinds of mineral fibers. It is preferably a tissue of mineral fibers which comprises or consists preferably of mineral fibers selected from a group consisting of glass fibers, basalt fibers and combinations thereof. A tissue of glass fibers, that is, a glass tissue, is especially preferred as substrate (10).

Although the thickness or weight of the substrate (10) is not particularly limited, a basis weight of 10 to 200 g/m², preferably 15 to 150 g/m² and more preferably 30 to 100 g/m², for instance 50 g/m², is suitable for most insulation applications. A lower basis weight may lead to reduced dimensional stability of the gas-tight material. A higher basis weight may be less preferable in terms of economic considerations.

As mentioned above, the protection layer (20) comprises or consists of thermoplastic polymers. The thermoplastic polymer can be selected from a group consisting of homopolymers and/or copolymers of C2 to C4 olefins, an ethylene vinyl acetate copolymer (EVA), an ethylene methyl acrylic acid copolymer (EMAA), an ethylene acrylic acid copolymer (EAA) and combinations thereof. In particular, a polyethylene, a polypropylene or a combination thereof is preferred. In terms of cost efficiency, the protection layer (20) preferably comprises or consists of polyethylene and/or polypropylene. Polyethylene such as LDPE (including LLDPE) is particularly preferred. A suitable LDPE may have a melt index (MI) of 4 to 15, preferably between 4 and 8.

The protection layer may be comprised of a single layer or a plurality of sub-layers which may each comprise or consist of one of the thermoplastic polymers described above.

The inventors have found that a basis weight of 10 to 100 g/m², preferably 15 to 80 g/m² and more preferably 25 to 75 g/m², for instance 50 g/m², of the protection layer (20) allows for sufficient protection of the gas barrier layer (30) from penetration by the mineral fibers. In case the protection layer (20) is too thin, the protection becomes insufficient and the mineral fibers can penetrate into the gas barrier layer (30). In case the protection layer (20) is too thick, the production of the gas-tight material is less economic. In this regard, protection layers (20) of the aforementioned basis weights made of polyethylene and/or polypropylene, in particular polyethylene, are favorable in terms of protection and cost efficiency.

The method for applying the protection layer (20) on the substrate (10) is not particularly limited. It can, for example, be applied by (co-)extrusion coating, a method which is in principle known by the person skilled in the art.

The gas barrier layer (30) can be arranged on the protection layer (20) by (co-)extrusion coating or a gas barrier layer (30) can be laminated thereon. The gas barrier layer (30) can be formed of a single layer or consist of a plurality of (different) layers.

The gas barrier polymers mentioned above allow for good gas-tightness. The gas barrier polymers in the gas barrier layer (30) contribute to a major extent to the gas-tightness of the gas-tight material of the present invention; other elements or layers of the gas-tight material have only a minor effect thereon. The gas barrier layer (30) contains in total at least 4 and up to 60 g/m², preferably 6 to 50 g/m² or even 8 to 40 g/m² of the gas barrier polymer.

In case the gas barrier layer (30) contains or consists of EVOH, it is preferable that it has in total less than 30 g/m², preferably 4 to 25 g/m², of EVOH. Hence, according to this embodiment, the gas barrier layer (30) contains preferably at least 4 and up to 60 g/m², preferably 6 to 50 g/m² or even 8 to 40 g/m², of the gas barrier polymers with the proviso that, when it comprises EVOH, it contains less than 30 g/m², preferably 4 to 25 g/m² and more preferably 6 to 20 g/m², of EVOH.

It is noted that, in case the gas barrier layer (30) has less than 4 g/m² of gas barrier polymers, the gas-tightness becomes too low. In case the amount of gas barrier polymers is too high, the material becomes more expensive.

In addition to the gas barrier polymers, the gas barrier layer (30) can further contain other materials such as thermoplastic polymers which are different from the gas barrier polymers. The gas barrier layer (30) is preferably based on polymers, it can contain at least 95 wt.%, preferably at least 98 wt.%, or consist completely of polymers, wherein these polymers are gas barrier polymers as defined above and optionally other polymers (wt.% = percent by weight).

The inventors have further found that EVOH has good gas barrier properties. The gas barrier layer (30) therefore preferably contains EVOH, in particular an EVOH having an ethylene content of 25 to 50 mol% (sometimes a notation like "EVOH 25 to 50 mol%" is used).

In a preferred embodiment, the gas barrier layer (30) comprises at least one layer of EVOH (31). The one or more EVOH layers (31) have in total (that is altogether) a basis weight of from 4 to 25 g/m², preferably 6 to 20 g/m² and more preferably 8 to 12 g/m². Further layers of other gas barrier polymers as defined above may be present provided that the entire amount of gas barrier polymers is at least 4 and up to 60 g/m², preferably 6 to 50 g/m² or even 8 to 40 g/m². In case a blown gas barrier layer (30) is laminated (directly) on the protection layer (20), the at least one EVOH layer (31) has a thickness of 2 to 16 µm, preferably 3 to 12 µm.

It is noted that, in the field, (blown) films are often characterized in µm and extruded layers are often characterized by the basis weight. Herein, the characterization in basis weight is used for all kinds of layers irrespective of their preparation. The characterization in µm is made in addition to that. The person skilled in the art can also calculate the basis weight, for example for a (blown) film, from the thickness and the known density of the material.

Herein, the thickness (in µm) of the entire gas-tight material is measured according to ISO 4593:1993-11.

The thickness (in µm) of individual layers of the gas-tight material and the gas barrier layer (30), respectively, is determined by microscopic techniques (microtome cut of the material). Identification of the material of the layers is possible by differential scanning calorimetry (DSC) and ATR infrared spectroscopy (ATR).

In a further development of the above embodiment, the gas barrier layer (30) comprises at least two layers of polyamide (32) which are arranged in a way, so that the at least one layer of EVOH (31) is arranged between the polyamide layers (32). In case the gas barrier layer (30) contains two or more layers (31) consisting of EVOH, it is preferred that each EVOH layer (31) is individually sandwiched between two polyamide layers (32). The polyamide layers (32) provide additional protection of the at least one EVOH layer (31) and increase the stiffness of the gas barrier layer (30). The at least one EVOH layer (31) is thus better protected from puncturing by the mineral fibers, for example in case of deformation of the gas-tight material, or by damages from external sources. The polyamide layers (32) are preferably directly arranged on the at least one EVOH layer (31).

Such a gas barrier layer (30) comprising at least one EVOH layer (31) and at least two layers of polyamide (32) can for example be first extruded or blown and then laminated on the protection layer (20). A preferred polyamide is PA6 or PA66. A preferred EVOH has an ethylene content of 25 to 50 mol%, for example 29 mol%. A very good gas barrier layer (30) is obtained by using 6 to 10 µm EVOH and 10 to 20 µm polyamide, preferably 7 to 9 µm EVOH and 14 to 18 µm polyamide and more preferably 8 µm EVOH and 16 µm polyamide.

Furthermore, the gas barrier layer (30) can comprise two outer layers (35) of a thermoplastic polymer which is independently selected from a group consisting of polyolefins, polyolefin copolymers and combinations thereof. The thermoplastic polymer is different from the gas barrier polymers defined above. It can be selected from a group consisting of homopolymers and/or copolymers of C2 to C4 olefins, an ethylene vinyl acetate copolymer (EVA), an ethylene methyl acrylic acid copolymer (EMAA), an ethylene acrylic acid copolymer (EAA) and combinations thereof. A polyethylene, a polypropylene or a combination thereof is preferred. If present in the gas barrier layer (30), the outer layers (35) constitute the outermost layers of the gas barrier layer (30), which can either be formed on the protection layer (20) by extrusion coating or lamination. Polyethylene and/or polypropylene, in particular polyethylene such as LDPE (including LLDPE), are preferred thermoplastic polymers for the outer layers (35). The outer layers (35) may, for example, have a layer thickness of 8 to 16 µm and/or a basis weight of 8 to 16 g/m². The outer layers provide additional protection of the layers of gas barrier polymers against puncturing.

The gas barrier layer (30) can comprise outer layers (35) of a thermoplastic polymer irrespective of the used gas barrier polymers. The outer layers (35) can for example sandwich the one or more EVOH layers (31) or the above described layer stack of at least one EVOH layer (31) and at least two polyamide layers (32).

Furthermore, tie layers (36), that is, bonding layers, may optionally be formed between the outer layers (35) and the at least one layer of the gas barrier polymer in order to increase the adhesion between the gas barrier polymer and the thermoplastic polymer of the outer layers (35). The tie layers (36) preferably comprise or consist of polyolefin terpolymers. In general, the tie layers (36) are quite thin, they usually have a thickness of 2 to 6 µm, preferably 3 to 5 µm, and/or a basis weight of 1 to 6 g/m², preferably 2 to 4 g/m².

The gas barrier layer (30) may further comprise one or more additional layers (38) which can, for example, comprise or consist of a thermoplastic polymer such as polyethylene and/or polypropylene. Such layers may be arranged in the center of the gas barrier layer (30) in order to separate layers of gas barrier polymers. Such additional layers (38) allow for further protection, because, in the event that objects penetrate into the gas barrier layer (30), they can still shield a part of the gas barrier polymer layers. An additional layer 38 can comprise a plurality of sub-layers of the same or a different polymer. Preferred are two sub-layers of the same polymer.

The entire gas barrier layer (30) has preferably a basis weight of 20 to 150 g/m². This includes the at least one layer of gas barrier polymer and, if present, outer layers (35), tie layers (36) and any additional layers (38).

The gas barrier layer (30) may also comprise or consist of PVDC or PVOH. A PVDC layer can for example be formed by dispersion coating. Such a layer can be combined with other layers or with another gas barrier layer (30) as described above.

According to a further embodiment, the gas-tight material further comprises a covering layer (40) which is arranged on the gas barrier layer (30) opposite to the protection layer (20). The gas barrier layer (30) is thus sandwiched between the protection layer (20) and the covering layer (40). The covering layer (40) is preferably directly applied on the gas barrier layer (30). It comprises or consists of a thermoplastic polymer which is different from the gas barrier polymer and selected from a group consisting of polyolefins, polyolefin copolymers and combinations thereof. The thermoplastic polymer can preferably be selected from a group consisting of homopolymers and/or copolymers of C2 to C4 olefins, an ethylene vinyl acetate copolymer (EVA), an ethylene methyl acrylic acid copolymer (EMAA), an ethylene acrylic acid copolymer (EAA) and combinations thereof. The thermoplastic polymer is preferably polyethylene and/or polypropylene and more preferably polyethylene such as LDPE.

The covering layer (40) which is (directly) applied on the gas barrier layer (30) on the side facing away from the substrate (10) and the protection layer (20) allows for further improved protection of the gas barrier layer (30) from puncturing or other damages, for example, when the gas-tight material is winded on a reel or further materials are applied thereon. The covering layer (40) has preferably a basis weight of 10 to 100 g/m² and can, for example, be formed by extrusion coating.

According to a further embodiment, the gas-tight material further comprises a covering layer (50) which is arranged on the substrate (10) opposite to the protection layer (20). The substrate (10) comprising or consisting of mineral fibers is thus encapsulated by the protection layer (20) and the covering layer (50). The covering layer (50) comprises or consists of a thermoplastic polymer which is different from the gas barrier polymers and selected from a group consisting of polyolefins, polyolefins copolymers and combinations thereof. The thermoplastic polymer can preferably be selected from a group consisting of homopolymers and/or copolymers of C2 to C4 olefins, an-ethylene vinyl acetate copolymer (EVA), an ethylene methyl acrylic acid copolymer (EMAA), an ethylene acrylic acid copolymer (EAA) and combinations thereof. The thermoplastic polymer is preferably polyethylene and/or polypropylene and more preferably polyethylene such as LDPE.

The covering layer (50) which is (directly) applied on the substrate (10) on the side facing away from the protection layer (20) and the gas barrier layer (30) allows for further improved protection of the gas-tight material. The covering layer (50) has preferably a basis weight of 10 to 100 g/m² and can, for example, be formed by extrusion coating on the substrate (10). It is preferred to first coat the substrate (10) of mineral fibers such as a glass tissue with the covering layer (50) and the protection layer (20), which can comprise or consist of the same or different thermoplastic polymers, in order to obtain an encapsulated substrate (10). It is particularly preferred that the covering layer (50) and the protection layer (20) consist of polyethylene such as LDPE. Then, the gas barrier layer (30) is laminated or extrusion coated on the protection layer (20).

According to a further embodiment, the gas-tight material comprises at least one nonwoven fabric which is a nonwoven fabric (60) arranged on the substrate (10) or the covering layer (50) opposite to the protection layer (20) and/or a nonwoven fabric arranged on the gas barrier layer (30) or the covering layer (40) opposite to the protection layer (20).

The nonwoven fabric (60) preferably comprises or consists of a thermoplastic polymer, such as polyester or polypropylene. The nonwoven fabric (60) can be applied directly on the substrate (10). It can also be applied (directly) on a layer that is arranged on the substrate (10) such as the covering layer (50) described above, which is preferred in terms of improved adhesion of the nonwoven fabric (60). The nonwoven fabric (60) allows for further improved protection and stability of the gas-tight material. It has a basis weight of 10 to 200 g/m², preferably 20 to 120 g/m² and more preferably 30 to 80 g/m². The nonwoven fabric (60) can be formed and applied on the substrate (10) or the covering layer (50), respectively, by any known method.

A nonwoven fabric that is arranged on the gas barrier layer (30), which may comprise outer layers (35) as described above, or on a covering layer (40) opposite to the protection layer (20) substrate (10) can be arranged directly on the gas barrier layer (30), or on a covering layer (40), if present. Formation on a covering layer (40) is preferred in terms of adhesion of the nonwoven fabric. The nonwoven fabric allows for further improved protection and stability of the gas-tight material and may serve as a suitable surface for further processing, for instance for making an insulation material such as a polyurethane (PU) insulation board. It has a basis weight of 10 to 200 g/m², preferably 20 to 120 g/m² and more preferably 30 to 80 g/m². It comprises or consists of a thermoplastic polymer, such as polyester or polypropylene. The nonwoven fabric can be formed and applied on the gas barrier layer (30) or the covering layer (40) respectively, by any known method.

In case more than one nonwoven fabrics are present in the gas-tight material, the nonwoven fabrics may either have an identical or a different constitution.

The embodiments of the gas-tight materials described herein may, of course, be combined in order to tune the properties of the gas-tight material.

In a particularly preferred embodiment, the gas-tight material comprises or consists of:
1. a substrate (10) consisting of glass fibers, i.e., a glass tissue, having a basis weight of 10 to 200 g/m², preferably 15 to 150 g/m² and more preferably 30 to 100 g/m², for example 50 g/m²;
2. an extruded protection layer (20) directly arranged on the substrate (10), the protection layer (20) consists of polyethylene, for example LDPE with a melt index of 4, and has a basis weight of 25 to 75 g/m², for example 50 g/m²;
3. a blown multilayer film as gas barrier layer (30) that is laminated directly on the protection layer (20), the gas barrier layer (30) comprises or consists of at least one EVOH layer (31) of EVOH 25 to 50 mol%, preferably EVOH 29 mol%, sandwiched between at least two layers of polyamide 32 provided that each EVOH layer (31) is individually sandwiched between two polyamide layers (32), wherein the entire gas barrier layer (30) has in total 7 to 9 µm EVOH and 14 to 18 µm polyamide, for example 8 µm EVOH and 16 µm polyamide;
4. an extruded covering layer (40) formed directly on the gas barrier layer (30), the covering layer (40) consists of polyethylene, for example LDPE with a melt index of 4, and has a basis weight of 10 to 100 g/m², preferably 15 to 80 g/m² and more preferably 25 to 75 g/m², for example 50 g/m².

The gas-tight material according to this embodiment possesses very good gas-tightness. It does not contain further gas barrier polymers. Further layers or elements may be arranged on the substrate (10), for example a covering layer (50) and/or a nonwoven fabric (60). Further layers or elements may be arranged on the covering layer (40), for example a nonwoven fabric.

In another particularly preferred embodiment, the gas-tight material comprises or consists of:
1. an optional nonwoven fabric (60) having a basis weight of 10 to 200 g/m², preferably 20 to 120 g/m² and more preferably 30 to 80 g/m², for example 45 g/m², the nonwoven fabric (60) is directly arranged on a covering layer (50);
2. a covering layer (50) which is extrusion coated directly on a glass tissue as substrate (10), the covering layer (50) consists of polyethylene, for example an LDPE with a melt index of 4, and has a basis weight of 10 to 100 g/m², preferably 15 to 80 g/m² and more preferably 25 to 75 g/m², for example 35 g/m²;
3. a substrate (10) consisting of glass fibers, i.e., a glass tissue, having a basis weight of 10 to 200 g/m², preferably 15 to 150 g/m² and more preferably 30 to 100 g/m², for example 54 g/m²;
4. a protection layer (20) directly arranged on the substrate (10), the protection layer (20) consists of polyethylene, for example LDPE with a melt index of 4, and has a basis weight of 25 to 75 g/m², for example 40 g/m²,
5. a coextruded gas barrier layer (30) that is extrusion coated directly on the protection layer (20), the gas barrier layer (30) comprises or consists of one EVOH layer (31) of EVOH 25 to 50 mol%, preferably EVOH 32 mol%, having a basis weight of 8 to 12 g/m², for example 10 g/m².

The gas-tight material according to this embodiment exhibits very good gas-tightness. It does preferably not contain further gas barrier polymers. Further layers or elements may be arranged on the covering layer (40), for example a nonwoven fabric.

It is noted that the gas-tight materials according to these particularly preferred embodiments contain only a small amount of gas barrier polymer, in particular EVOH, but exhibit very good gas-tightness. As the glass tissue is covered by a protection layer (20) of polyethylene, the glass fibers do not penetrate into the gas barrier layer (30). The gas-tight material can be produced economically due to the thin layer(s) of gas barrier polymer and the comparably thin protection layer (20) of inexpensive polyethylene.

The gas-tight material according to the two above described preferred embodiments is free of paper, cardboard and metal.

Since the gas-tight material is durable and can be produced economically, it is suitable for many applications.

A further aspect of the present invention is the use of the gas-tight material according to one of the embodiments described herein for making building insulations or building insulation materials, packing materials and textiles. The use for building insulations or building insulation materials includes, in particular, the production of facers for insulation materials. Such insulation materials may, for instance, contain polyurethane foams. Polyurethane foams often contain pentane, which has superior insulation properties. Since the gas-tight material according to the present invention has very good barrier properties, it is particularly suitable for the use in facers for polyurethane foams.

A further aspect of the present invention is therefore directed to a facer for insulation materials, wherein the facer comprises the gas-tight material according to one the embodiments described herein. The insulation material can for example comprise or consist of a polyurethane foam. The insulation material can optionally have a suitable surface for further processing of the insulation material, for example for external thermal insulation composite systems (ETICS).

Another aspect of the present invention is directed to a process for making the gas-tight material according to one of the embodiments described herein. The process comprises the steps of:
(A) providing a substrate (10) comprising mineral fibers;
(B) applying a protection layer (20) on the substrate (10), wherein the protection layer (20) has a basis weight of 10 to 100 g/m² and comprises a thermoplastic polymer selected from the group consisting of polyolefins, polyolefin copolymers and combinations thereof; and
(C) applying a gas barrier layer (30) on the protection layer (20), so that the protection layer (20) is arranged between the substrate (10) and the gas barrier layer (30), wherein
   - the gas barrier layer (30) contains at least one layer of a gas barrier polymer which is selected from a group consisting of an ethylene vinyl alcohol copolymer (EVOH), a polyvinyl alcohol (PVOH), a polyvinylidene chloride (PVDC), a polyamide (PA), a polyethylene terephthalate (PET) and combinations thereof,
   - the gas barrier layer (30) contains at least 4 and up to 60 g/m² of the gas barrier polymer, and
   - the thermoplastic polymer of the protection layer (20) is different from the gas barrier polymer.

Conventional methods may be used for making the substrate (10), the protection layer (20), the gas barrier layer (30) as well as all other optional layers or elements of the gas-tight material or the facer for insulation materials comprising said gas-tight material. These methods include for instance lamination, such as glue lamination and extrusion lamination.

The gas barrier layer (30) is preferably applied on the protection layer (20) via extrusion coating or lamination.

In case of extrusion coating, the gas barrier layer (30) is extruded or coextrude on the protection layer (20).

In case of lamination, the gas barrier layer (30) is first formed and then laminated on the protection layer (20). This approach is particularly preferred for multilayer gas barrier layers (30) comprising 8 or more (thin) layers.

### Examples

### Example 1

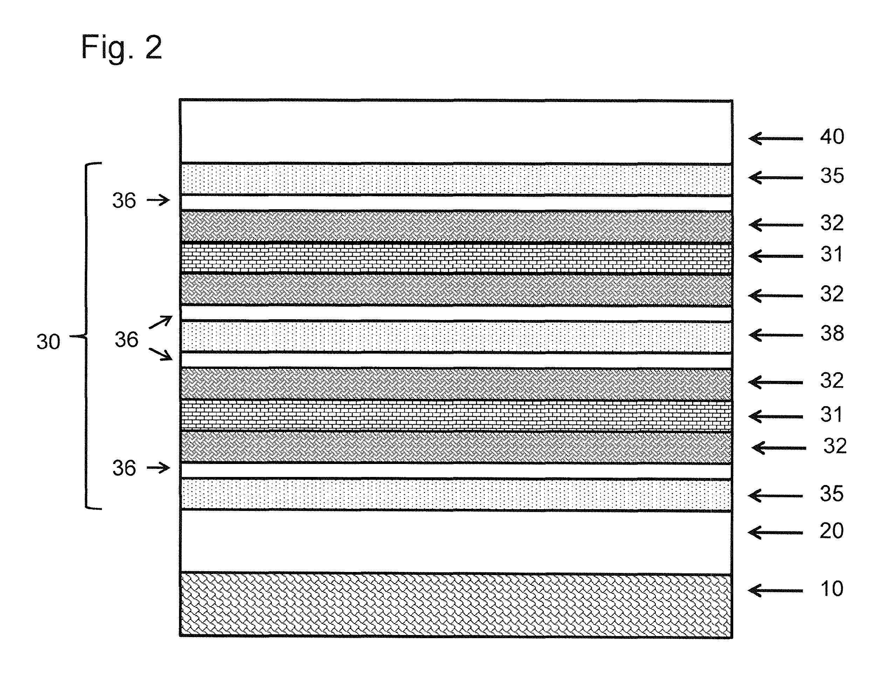

The gas-tight material according to Example 1 is illustrated in Fig. 2 in a schematic, cross-sectional view.

The gas-tight material according to Example 1 consists of:
1. a substrate (10) which is a glass tissue of 50 g/m²;
2. a protection layer (20) which is an extruded layer consisting of LDPE, 50 g/m²;
3. a gas barrier layer (30) consisting of a blown film of 13 layers, the gas barrier layer (30) is laminated on the protection layer (20). The layers of the gas barrier layer (30) are as follows (starting with the layer closest to the protection layer (20)):
   - an outer layer (35) which consists of LDPE, 11 µm;
   - a tie layer (36) which consists of polyethylene terpolymer, 4 µm;
   - a polyamide layer (32) which consists of polyamide, 4 µm;
   - an EVOH layer (31) which consists of EVOH 29 mol%, 4 µm;
   - a polyamide layer (32) which consists of polyamide, 4 µm;
   - a tie layer (36) which consists of polyethylene terpolymer, 4 µm;
   - a layer (38) which consists of LLDPE, 18 µm;
   - a tie layer (36) which consists of polyethylene terpolymer, 4 µm;
   - a polyamide layer (32) which consists of polyamide, 4 µm;
   - an EVOH layer (31) which consists of EVOH 29 mol%, 4 µm;
   - a polyamide layer (32) which consists of polyamide, 4 µm;
   - a tie layer (36) which consists of polyethylene terpolymer, 4 µm;
   - an outer layer (35) which consists of LDPE, 11 µm;
4. a covering layer (40) which is an extruded layer consisting of LDPE, 50 g/m².

A suitable polyethylene terpolymer for the tie layers (36) is ADMER NF 518E.

The gas barrier layer (30) and thus the gas-tight material of Example 1 contains in total 16 µm polyamide layers (32) and 8 µm EVOH layers (31) with an ethylene content of 29 mol%. The gas-tight material has an oxygen transmission rate (OTR) of 1.67 cm³/(m²·day) at 23°C and 75% relative humidity as measured according to ASTM D 3985.

### Example 2

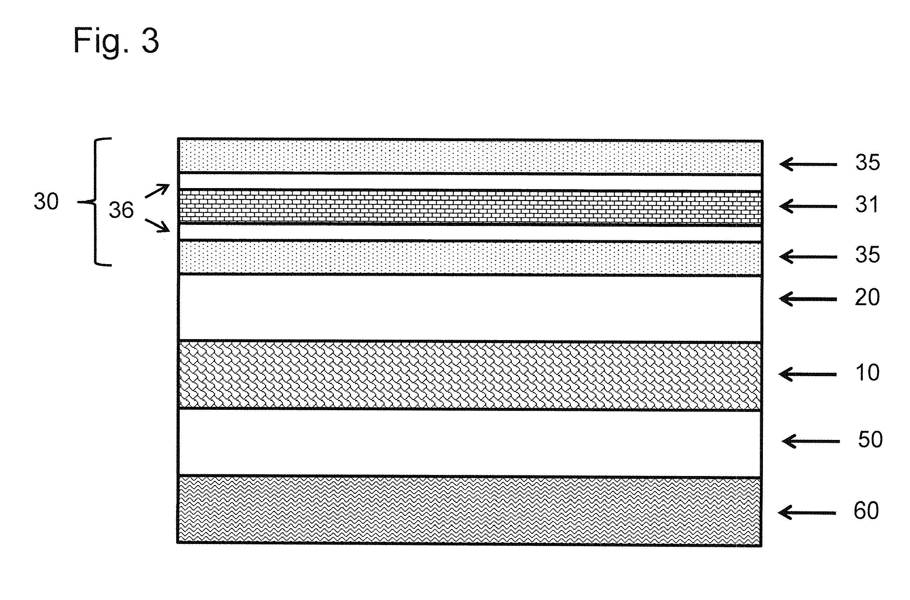

The gas-tight material according to Example 2 is illustrated in Fig. 3 in a schematic, cross-sectional view.

The gas-tight material according to Example 2 consists of:
1. a nonwoven fabric (60), 45 g/m²;
2. a covering layer (50) which is an extruded layer consisting of LDPE, 35 g/m²;
3. a substrate (10) which is a glass tissue, 54 g/m²;
4. a protection layer (20) which is an extruded layer consisting of LDPE, 40 g/m²;
5. a gas barrier layer (30) which is a coextruded film of 5 layers formed directly on the protection layer (20). The layers of the gas barrier layer (30) are as follows (starting with the layer closest to the protection layer (20)):
   - an outer layer (35) which consists of LDPE, 12 g/m²;
   - a tie layer (36) which consists of polyethylene terpolymer (ADMER NF837E), 3 g/m²;
   - an EVOH layer (31) which consists of EVOH 32 mol% (EVAL F104B from Kuraray), 10 g/m²;
   - a tie layer (36) which consists of polyethylene terpolymer (ADMER NF837E), 3 g/m²;
   - an outer layer (35) which consists of LDPE, 12 g/m²;

The gas barrier layer (30) and thus the gas-tight material of Example 2 contains in total 10 g/m² EVOH with an ethylene content of 32 mol%. The gas-tight material had an oxygen transmission rate (OTR) of 2,79 cm³/(m²·day) at 23°C and 75% relative humidity as measured according to ASTM D 3985.

The Examples 1 and 2 show most impressively that gas-tight materials which exhibit excellent gas barrier properties can be produced with small amounts of gas barrier polymers such as polyamide and EVOH. The gas-tight materials according to both Examples contain a comparably thin protection layer (20) of LDPE having a basis weight of 50 g/m² and 40 g/m², respectively. The gas-tight materials can thus also be produced economically.

## Claims

1. A gas-tight material comprising:
a substrate (10) comprising mineral fibers;
a protection layer (20) arranged on the substrate (10), wherein the protection layer (20) has a basis weight of 10 to 100 g/m² and comprises a thermoplastic polymer selected from the group consisting of polyolefins and polyolefin copolymers and combinations thereof; and
a gas barrier layer (30) which is arranged on the protection layer (20), so that the protection layer (20) is arranged between the substrate (10) and the gas barrier layer (30), wherein
- the gas barrier layer (30) contains at least one layer of a gas barrier polymer which is selected from a group consisting of an ethylene vinyl alcohol copolymer (EVOH), a polyvinyl alcohol (PVOH), a polyvinylidene chloride (PVDC), a polyamide (PA), a polyethylene terephthalate (PET) and combinations thereof,
- the gas barrier layer (30) contains at least 4 and up to 60 g/m² of the gas barrier polymer, and
- the polyolefins and polyolefin copolymers of the protection layer (20) are different from the gas barrier polymer.

2. The gas-tight material according to claim 1, wherein the substrate (10) is a tissue of mineral fibers, wherein the mineral fibers are selected from a group consisting of glass fibers, basalt fibers and combinations thereof.

3. The gas-tight material according to claim 1 or 2, wherein the thermoplastic polymer of the protection layer (20) is a polyethylene, a polypropylene or a combination thereof.

4. The gas-tight material according to one of the claims 1 to 3, wherein the gas barrier layer (30) contains in total less than 30 g/m² of EVOH.

5. The gas-tight material according to one of the claims 1 to 4, wherein the gas barrier layer (30) comprises at least one layer of EVOH (31) which has in total a basis weight of from 4 to 25 g/m².

6. The gas-tight material according to claim 5, wherein the gas barrier layer (30) comprises at least two layers of polyamide (32), so that the at least one layer of EVOH (31) is arranged between the polyamide layers (32).

7. The gas-tight material according to one of the claims 1 to 6, wherein the gas barrier layer (30) comprises two outer layers (35) of a thermoplastic polymer which is different from the gas barrier polymer and selected independently from a group consisting of polyolefins, polyolefin copolymers and combinations thereof.

8. The gas-tight material according to one of the claims 1 to 7, wherein the gas-tight material further comprises a covering layer (40) which is arranged on the gas barrier layer (30) opposite to the protection layer (20), the covering layer (40) comprises a thermoplastic polymer which is different from the gas barrier polymer and selected from a group consisting of polyolefins, polyolefin copolymers and combinations thereof.

9. The gas-tight material according to one of the claims 1 to 8, wherein the gas-tight material further comprises a covering layer (50) which is arranged on the substrate (10) opposite to the protection layer (20), the covering layer (50) comprises a thermoplastic polymer which is different from the gas barrier polymer and selected from a group consisting of polyolefins, polyolefin copolymers and combinations thereof.

10. The gas-tight material according to claim 8 or 9, wherein the covering layer (40) arranged on the gas barrier layer (30) and/or the covering layer (50) arranged on the substrate (10) has a basis weight of 10 to 100 g/m².

11. The gas-tight material according to one of the claims 1 to 10, wherein the gas-tight material further comprises at least one nonwoven fabric which is a nonwoven fabric (60) arranged on the substrate (10) or the covering layer (50) opposite to the protection layer (20) and/or a nonwoven fabric arranged on the gas barrier layer (30) or the covering layer (40) opposite to the protection layer (20).

12. A process for making the gas-tight material as defined in claim 1, the process comprising the steps of:
(A) providing a substrate (10) comprising mineral fibers;
(B) applying a protection layer (20) on the substrate (10), wherein the protection layer (20) has a basis weight of 10 to 100 g/m² and comprises a thermoplastic polymer selected from the group consisting of polyolefins, polyolefin copolymers and combinations thereof; and
(C) applying a gas barrier layer (30) on the protection layer (20), so that the protection layer (20) is arranged between the substrate (10) and the gas barrier layer (30), wherein
- the gas barrier layer (30) contains at least one layer of a gas barrier polymer which is selected from a group consisting of an ethylene vinyl alcohol copolymer (EVOH), a polyvinyl alcohol (PVOH), a polyvinylidene chloride (PVDC), a polyamide (PA), a polyethylene terephthalate (PET) and combinations thereof, and
- the gas barrier layer (30) contains at least 4 and up to 60 g/m² of the gas barrier polymer, and
- the thermoplastic polymer of the protection layer (20) is different from the gas barrier polymer.

13. The process according to claim 12, wherein the gas barrier layer (30) is applied on the protection layer (20) via extrusion coating or lamination such as glue lamination.

14. A facer for insulation materials, wherein the facer comprises the gas-tight material as defined in one of the claims 1 to 11.

15. Use of the gas-tight material as defined in one of the claims 1 to 11 for making building insulations or building insulation materials, packing materials and textiles.
